Europäisches Patentamt

European Patent Office

Office européen des brevets

(10)

(11) Publication number: **0 187 759**
**B1**

# (12) EUROPEAN PATENT SPECIFICATION

(45) Date of publication of patent specification: **24.01.90**

(21) Application number: **85901288.2**

(22) Date of filing: **04.09.84**

(86) International application number:
**PCT/US84/01409**

(87) International publication number:
**WO 85/05069 21.11.85 Gazette 85/25**

(51) Int. Cl.⁵: **B 29 C 39/42, B 29 C 67/14,
B 29 C 67/18, B 29 C 67/20 //
B29K63/00, B29K105/16,
B29K105/20**

## (54) METHOD OF FABRICATING COMPOSITE OR ENCAPSULATED ARTICLES.

(30) Priority: **09.05.84 US 608614**

(43) Date of publication of application:
**23.07.86 Bulletin 86/30**

(45) Publication of the grant of the patent:
**24.01.90 Bulletin 90/04**

(84) Designated Contracting States:
**BE CH DE FR GB LI NL SE**

(56) References cited:
**CH-A- 502 886
FR-A-1 305 243
FR-A-1 330 854
GB-A- 903 734
GB-A-1 108 595
GB-A-1 111 436
US-A-3 028 284
US-A-3 541 194
US-A-4 374 080**

**Chemical Abstracts, vol. 78, 1973, Columbus,
Ohio, US, page 36, abstract no. 112235x**

(73) Proprietor: **Hughes Aircraft Company
7200 Hughes Terrace P.O.Box 45066
Los Angeles California 90045-0066 (US)**

(72) Inventor: **OLDHAM, Susan, L.
3473 Heather Road
Long Beach, CA 90808 (US)**

(74) Representative: **Kuhnen, Wacker & Partner
Schneggstrasse 3-5 Postfach 1553
D-8050 Freising (DE)**

Courier Press, Leamington Spa, England.

**Description**

This invention relates to a method of preparing a resin based filler reinforced composite article according to Claim 1. This invention further relates to a method for encapsulating an electrical component according to Claim 2. The composite article exhibits improved performance characteristics such as reduced weight and thermal expansion coefficients, whersws the encapsulated electrical components provide increased resistance to electrical stress.

The successful utilization of filler reinforced composites in aerospace applications, such as antenna fabrication, imposes several important requirements on the filler reinforced composite. A feature of primary importance is that the composite have strength and dimensional stability characteristics (e.g. a low linear coefficient of thermal expansion) calculated to withstand the rigors of environmental temperature cycling.

In addition, for complex structures such as antennae, structures molded from epoxy resin based composites are preferred over metal structures since the composite can be molded directly, thereby avoiding costly machining operations. Glass and graphite fiber reinforced epoxy based composites are finding growing use in aerospace applications because of their high strength-to-weight ratio. These composite materials, because of their relatively low coefficient of thermal expansion ($a$), find wide application in structural components such as antenna used in space. Such materials are described, for example, by H. S. Katz and J. V. Milewski, in the book entitled "Handbook of Fillers and Reinforcements for Plastics", Chapter 19, Hollow Spherical Fillers, Van Nostrand Reinhold Company, New York, 1978, pages 326 to 330. In a space environment where one face of the structural member is subjected to constant sunlight while the opposite face of the member is in darkness, the face exposed to sunlight is heated considerably more than the opposed face. Such non-uniform heating causes uneven expansions of the structural members making up the antenna with the resultant distortion of the antenna from its desired shape. Thus, aerospace use requires that some critical antenna structural components exhibit a dimensional stability over a ten year lifetime in the operating range of 54° to 115°F (12 to 46°C) and have densities equal to or less than 0.9 grams/cm$^3$. When the structural components are electroplated with a metal layer to provide, for example, utility as an electromagnetic interference (EMI) shielding or a conductive path in an antenna waveguide structure, the metal coating layer must also withstand thermal cycling in the extremes of the space environment without loss of adhesion.

Furthermore, in another area of current interest, it is recognized that high voltage power supplies and pulse forming networks for aerospace use must meet high standards of performance and reliability for long periods under extreme environmental conditions. To assure trouble-free operation of components within the assembly, the components, such as magnetic coils, capacitors, diode arrays, transformers, stator generators, and resistor networks, are commonly encapsulated with synthetic resin materials to provide electrical insulation to the components. Such encapsulants for electrical and electronic components are described, for example, in the book by Katz et al, previously referenced, at page 327.

Because of their excellent adhesion, good mechanical, humidity and chemical properties, epoxy resins are used extensively both as encapsulants for electronic components and in combination with glass and graphite fibers and microballoons in the manufacture of the previously discussed high performance reinforced composite structures, such as antenna. The encapsulated article or filled epoxy resin composite is molded using conventional molding techniques, such as compression molding or transfer molding, in which the required materials including the resin are loaded into a cylinder, and curing of the resin is effected under increased pressure, using hydrostatic gas pressure or hydraulic pressure, respectively. Problems encountered in the molding of the epoxy systems and especially filled epoxy resin systems have limited the use of these resins as encapsulants, as well as for the fabrication of structural composites useful in a space environment. In molding filler reinforced composites, the problem is aggravated due to the fact that high filler loadings, e.g. 40 to 60 percent by weight, are required in the epoxy resin based composite structures to achieve the required low $a$ value and corresponding high dimensional stability. Thus, when using transfer molding or batch encapsulation techniques, the use of high filler contents in the epoxy system impedes adequate resin flow into the mold because of the high viscosity of such a resin system. This, in turn, results in varying filler orientations and distributions within the geometrical areas in the complex structures being molded, with a resultant loss in $a$ and ultimate dimensional stability, as well as erratic adhesion of metal layers plated on the surfaces of the structure. This problem is further aggravated when hollow particulates such as glass or graphite microballoons are used as filler materials since the high viscosity filled epoxy resin may have unpredictable densities due to microballoon fractures and voids in the filler/resin mixture. Further, high viscosity resins are unable to penetrate and impregnate the filler to provide homogeneous systems.

In addition, with regard to encapsulants for electrical components, state-of-the-art heat curable epoxy resin systems used as encapsulating resins have the disadvantage that the viscosity of the resin at working temperatures, e.g. 100°C, (75°F), are quite high, e.g., 500 centipoise (cps), and such resins are not intruded completely into crevices present in the electrical component. Thus, the insulation is often incomplete and defective.

U.S.—A—4,374,080 (Schroeder) discloses an apparatus and method of use thereof for encapsulating an electronic component which includes placing the component in a mold cavity, filling the cavity with particulate filler material, evacuating the mold cavity to remove glass and moisture, filling the evacuated mold cavity with encapsulating compound, removing the vacuum source and allowing atmospheric pressure to return in the mold cavity, and solidifying the encapsulating compound.

Said reference is clearly directed to an apparatus and method of using same and not to any new process steps for accomplishing encapsulation.

GB—A—1,108,595 (Townes et al) discloses a method for encapsulating a high voltage winding by placing the winding in a mold, gravity-filling the mold with a first casting resin under vacuum, applying increased pressure to expel excess liquid, gravity-filling the mold with a second and different casting liquid, and curing all the resin in the mold. The process of Townes et al is preformed at 0.5 millimeters of mercury.

In view of the lack of process detail in said GB—A—1,108,595, it is clear that Townes' invention is directed to an apparatus and the method of using same, rather than toward any new process steps for accomplishing encapsulation.

It is the primary object of the present invention to provide a method for molding filled thermosetting resins such as polyimides, bismaleimides, and particularly epoxy resins, to prvide resin based filler reinforced composite structural components which have a low coefficient of thermal expansion rendering the composite relatively insensitive to environmental temperature cycling while possessing desirable performance properties of low density, high strength, and amenability to the plating of adhering metal films and coatings.

It is a further object of the present invention to provide a method for encapsulating electrical components or devices to provide components or devices having improved reliability and improved electrical properties.

The above objectives are achieved in accordance with the present invention, according to Claim 1.

The heat curable, thermosetting resins employed in the molding compositions used in this invention can be any low-viscosity heat curable resin. Preferred heat curable resins are low-viscosity epoxy resins having 1,2 epoxy groups or mixtures of such resins, and include cycloaliphatic epoxy resins, such as the glycidyl ethers of polyphenols, epoxy resins, liquid bisphenol-A diglycidyl ether epoxy resins (such as that sold under trademark as EPON 815 by Shell Chemical Company). In addition, other resin compositions, such as polyimide compositions and bismaleimide compositions, having appropriate viscosities, gel times, green strengths, and dielectric properties may be used in the practice of the present invention.

Epoxy resins preferred in the practice of the method of the present invention are polyglycidyl aromatic amines, i.e. N-glycidyl amino compounds conventionally prepared by reacting a halohydrin such as epichlorohydrin with an amine. Examples of those preferred polyglycidyl aromatic amines include diglycidyl aniline, diglycidyl orthotoluidine and tetraglycidyl metaxylene diamine.

The epoxy resins are admixed with polyfunctional curing agents to provide heat curable epoxy resins whch are cross-linkable at a moderate temperature, e.g. about 100°C, to form thermoset articles. Suitable polyfunctional curing agents include polycarboxylic acid anhydrides of which nadic methyl anhydride (i.e. a maleic anhydride adduct of methyl cyclopentadiene), methyl tetrahydrophthalic anhydride and methyl hexahydrophthalic anhydride are exemplary. Polycarboxylic acid anhydride compounds are preferred curing agents for polyglycidyl aromatic amine based epoxy resin compositions, the epoxy resin is mixed with the curing agent in proportions from about 0.6 to about 1.0 of the stoichiometric proportions.

Cure accelerators can be employed in preparing the heat curable epoxy resin formulations, and in particular when using polycarboxylic acid anhydrides as curing agents, the preferred accelerators include substituted imidazoles such as 2-ethyl-4-methyl imidazole and organometallic compounds such as stannous octoate, cobalt octoate, and dibutyl tin dilaurate.

The term "curing" as used herein denotes the conversion of the thermosetting resin into an insoluble and infusible crosslinked product and, as a rule, with simultaneous shaping to give shaped articles.

To prepare resin based filler reinforced composite articles in accordance with one embodiment of the present invention, the epoxy resin in admixture with the curing agent and accelerator are further mixed before curing with fillers and reinforcing agents, as for example, glass fibers, carbon fibers, graphite fibers, Kevlar fibers, glass microballoons, carbon microballoons, ceramic particles, or glass particles, and the mixture is loaded into the mold. However, it is preferred in the practice of the method of the present invention that the mold be prepacked with the filler, i.e. the filler is added first to the mold, followed by the addition of the heat curable resin. If the filler is premixed with the resin and then loaded into the mold, a cured composite with varying filler orientations and distributions within the different geometrical areas of the mold is produced. In the preferred embodiment of the present invention, the components of the filler, such as fibers and microballoons, are pretreated with a titanate sizing agent as discussed below and are mixed mechanically or manually to form a homogenous mixture, which is then added to the mold cavity. Next, the mold may optionally be vibrated to promote a uniform distribution of the filler in the mold. It has been found by using packing theory that an increased volume percent solids in the resin mixture can be achieved. Packing theory is based on the concept that, since the largest particle size filler in a particular reinforcement system packs to produce the gross volume of the system, the addition of succeedingly smaller particles can be done in such a way as to simply occupy the voids between the larger filler without expanding the total volume. This theory is discussed by Harry S. Katz and John V. Milewski, in the book entitled "Handbook of Fillers and Reinforcements for Plastics", Chapter 4, Packing Concepts in Utilization of Filler and Reinforcement Combinations, Van Nostrand Reinhold, 1978. The fillers used in the present invention are chosen on the basis of particle size, shape, and contribution to overall composite properties. This theory applies to the use of solid particulates as well as hollow spheres. Because of the high viscosity of such a highly loaded resin, the mixture could not flow into the mold without damaging the microspheres. To overcome this problem, the mold is pre-packed with the dry filler (i.e. a mixture of microspheres and fibers). By applying packing theory as described above, the filler can be packed at a high density and so that segregation of ingredients does not occur. The use of maximum filler loading with a very low viscosity resin and appropriate coupling agents (for good filler-matrix adhesion) results in a material which, when vacuum liquid transfer molded as described herein, provides homogenous, void-free structures.

The composite article formed in accordance with the preferred process embodiment of the present invention is referred to herein as a "fiber reinforced syntactic foam composite", which denotes a composite of a syntactic foam (i.e. a foam made by incorporating hollow spheres in a liquid resin) and reinforcing fibers dispersed throughout the syntactic foam. The composite article formed in accordance with the present invention is also referred to herein in a more general sense as a "resin based filler reinforced composite", which indicates a composite of a resin and reinforcing filler material.

Preferred filler materials are fibers of predetermined length and hollow microsphers of predetermined diameter. The fibers may be formed of graphite, glass, carbon or polyamide, while the hollow microspheres may be formed of glass, silica or carbon.

Carbon fibers useful as reinforcing agents in molding the present filler reinforced composites are high strength, high modulus fibers composed essentially of amorphous carbon but more preferably of graphite or pyrolytic graphite and generally referred to as graphite fiber. One type of graphite fiber which may be used in reinforcing the composites are HM-S graphite fibers (available from the Courtaulds Company of the United Kingdom) which have the following dimensions and physical properties:

| | |
|---|---|
| Modulus (stress/strain) | 50 million psi ($3.45 \times 10^{11}$ pascals) |
| Length | 50 micrometers ($\mu$) |
| Density | 1.83 gm/cm$^3$ |

Glass microballoons or hollow microspheres used as fillers are composed essentially of silica and typical glass microballoons which may be used have the following dimensions and physical properties:

| | |
|---|---|
| Diameter | 10—200 $\mu$ |
| Density | 0.15 to 0.32 gm/cm$^2$ |

Carbon microballoons are composed primarily of thin-walled carbon balloons and typical ones which may be used have the following dimensions and physical properties:

| | |
|---|---|
| Diameter | 40 $\mu$ |
| Density | 0.32 gm/cm$^3$ |

As is known to the art, wetting of fillers, such as graphite fibers, by epoxy resins can be facilitated by the use of titanate sizing agents such as di(dioctylpyrophosphato)ethylene titanate (KR238M available from Kenrich Petrochemical Company of Bayonne, New Jersey), tetra(2,2-diallyloxymethyl 1-butoxy) titanium di(ditridecyl) phosphite (KR55 available from Kenrich) or titanium di(cumylphenylate)oxyacetate (KR134S, available from Kenrich), whereby compaction and resin penetration of the filler by the resin is enhanced by the presence of such agents, and the use of such sizing agents represents a preferred practice of the present invention. The sizing agents may be dissolved in the mixture of resin, microspheres and fibers; or, preferably they are applied to a mixture of the microspheres and fibers in predetermined proportions by immersing this mixture in a solution of the sizing agents, followed by filtering and drying the mixture to provide a pretreated microsphere/fiber mixture.

The following formulations show the range of proportions, in percent by weight and percent by volume, of the components which a filled heat curable epoxy resin formulation may suitably contain for use in the molding of filler reinforced composite articles in accordance with the process of the present invention. It should be noted that other resin-fiber-microsphere mixtures besides those specifically shown may also be used and may be adjusted to meet particular end use requirements.

4

EP 0 187 759 B1

| Component | Wt.% | Vol.% |
|---|---|---|
| Epoxy composition | 50—75 | 23—60 |
| Filler (graphite fiber and microballoons) with density of 0.54 to 0.33 | 20—50 | 38—77 |
| Sizing agent (organic titanate) | 0—3 | 0—2 |

To form the epoxy composition, the epoxy resin, curing agent and curing accelerator chosen for the molding resin can be mixed in any conventional fashion. The curing agent can be mixed into the epoxy resin at room temperature. A solid curing agent in powdered form also can be admixed in the epoxy resin at room temperature by continuous agitation prior to mixing with the chosen epoxy resin.

The use of polyglycidyl aromatic amines as the epoxy resin component of the composite to be molded provides a low viscosity, solvent-free, liquid epoxy component. For example, polyglycidyl aromatic amines such as diglycidyl orthotoluidene combined with curing agents such as nadic methylanhydride have viscosities in the range of 125 to 500 centipoise (cps) when measured at 75°F (24°C). By using such low viscosity resins in the molding process of the present invention, total wetting and complete impregnation of the filler and voids therein is readily accomplished, resulting in homogeneous, void-free, composite structures.

To prepare composite articles in accordance with the method of the present invention, a suitable quantity of filler comprising, for example, premixed and pretreated fibers and microspheres as previously described, is loaded in a suitable mold cavity and the mold may optionally be vibrated to promote a uniform distribution of the filler in the mold. The mold may be made, for example, of tool steel, internally coated with a release coating such as a fluorocarbon polymer, e.g., teflon, or sprayed prior to loading of the filler with a release agent such as polyvinyl alcohol. The shape of the mold cavity will, of course, determine the shape of the article molded therein. To prepare for the molding process, the mold cavity is preheated to a temperature at which the thermosetting resin formulation is curable and is maintained at this temperature. In the case of polyglycidyl aromatic amine based epoxy resin formulations, the mold is preheated to about 150 to 250°C (66 to 122°C). A suitable quantity of the uncured resin, such as an epoxy resin formulated as described above, is introduced into the mold cavity in a quantity sufficient to fill the mold. A subatmospheric pressure or vacuum is then drawn on the mold, generally about 1 to about 200 mmHg and preferably about 5—150 mmHg to impregnate the filler and to remove entrapped air or other bubbles from the resin contents during this "active vacuum" stage. The vacuum is drawn for about 1 to 5 minutes either on the autoclave, the vacuum bag and press, or the mold itself. The vacuum is then released to allow for collapse of any bubbles. This "passive vacuum" stage is performed for about 1 to 5 minutes before any further molding steps are initiated. Next, a superatmospheric pressure on the order of about 100 to about 1000 psi (about $6.90 \times 10^5$ to $6,90 \times 10^6$ pascals) is imposed on the mold to cause the filler to compact and the resin to encapsulate the filler. The increased pressure provides optimized flow of the resin into the interstices between the filler particles, as well as forcing excess resin out of the mold by use of a resin bleeding means. This latter pressurization step may be accomplished by placing the mold in a laminating or transfer press or an autoclave. When a laminating press or autoclave is used, a vacuum bag is constructed around the compression tooling. When a transfer press is used, the permanent mold of the transfer press acts as the vacuum pressure chamber, with pressurization being produced by activation of the transfer ram. Under this pressure, the mold temperature is maintained at the temperature at which the thermosetting resin is curable, e.g., about 66 to about 121°C (about 150°F to about 250°F) in the case of heat curable epoxy resins for a predetermined time period, e.g., about 1 to 2 hours, until the resin/filler mixture has sufficiently cured or has sufficient mechanical (green) strength to be ejected from the mold cavity as a unitary structure. Thereafter, the molded, partially cured composite is post-cured at the curing temperature or higher (e.g., about 250 to about 350°F or about 121 to 177°C) for 1.5 to 4 hours to fully cure the resin, in a suitable heating device such as an oven. In the post-cure step for filler reinforcing composites, the molded composite article is generally cured in an unrestrained state. To avoid deformation of the composite caused by thermally induced sagging of the unrestrained composite, it has been found advantageous to heat the composite upon its removal from the mold at a rate of 3 to 5°F (1.5 to 3°C) per minute until the post-cure temperature is reached, and then cure the composite in an unrestrained condition at the postcure temperature for about 2 to about 5 hours.

In accordance with another embodiment of the present invention a method for encapsulating an electrical component comprises steps a—k of Claim 2. In this embodiment of the invention the general procedure described above for forming a composite article is followed except that the electrical component, such as a magnetic coil, rather than a filler material, is loaded into the mold cavity. The subatmospheric pressure used to produce impregnation of the coil or other electrical component is preferably about 1 to about 4 millimeters of mercury (133 to 534 pascals). The preferred superatmospheric pressure is about 50 to about 100 pounds per square inch (about $3.45 \times 10^5$ to $6.90 \times 10^5$ pascals), and the

mold contents are subjected to this superatmospheric pressure at a temperature of about 66 to about 121°C (about 150 to about 250°C) for a heat curable epoxy resin for about 30 minutes to 3 hours. After ejection from the mold, the resin is post cured at about 275°F to 325°F (about 135 to 163°C) for about 2 to 4 hours to ensure total curing and cross-linking of the resin composition.

In order to encapsulate a number of devices at one time, an individual mold having multiple cavities may be used, with one device being placed in each cavity. The resin is introduced into the preheated individual mold and then the individual mold or a number of individual molds are placed in the permanent mold or chamber of the transfer press for the application of vacuum or pressurization in accordance with the process of the present invention. Further, when the process of the present invention is used to encapsulate electrical devices, matched molds are used to provide net parts, or parts having the desired final configuration, with negligible finishing operations being required. In addition, the faste cure time of the preferred resins described herein substantially reduces the molding time as compared to batch encapsulation. These latter two factors provide substantial savings in labor costs by using the process of the present invention rather than known batch encapsulation processes.

It should be noted that subatmospheric pressures and superatmospheric pressures other than those specifically noted above might be required in order to achieve impregnation and encapsulation of a particular device or material. For example, a tightly wound coil might require more extreme vacuum or pressurization than a less tightly wound coil. In addition, the viscosity or other physical properties of the particular resin used might also affect the subatmospheric pressure required to produce impregnation of the article or the superatmospheric pressure required to produce compaction and encapsulation of the article.

Further, it is recognized that such process details as the curing temperature, dwell time and post-cure conditions, will depend, among other things, upon the composition of the particular resin used. The specific process details recited above for an epoxy resin are not intended to limit the present invention, but only to provide an example thereof. Moreover, it is recognized that the process of the present invention may be partially or fully automated for use in a production environment.

In another alternative process embodiment of the present invention for encapsulating an article, the mold is first loaded with a predetermined quantity of filler and then the article to be encapsulated, such as an electrical component, is placed within the filler material so as to be surrounded by the filler. Then, the resin is introduced into the mold and the previously described procedure for encapsulating an electrical component is followed. The article so formed comprises the electrical component impregnated with the resin and having an overcoat a few microns $\times 2,5$ thick of the resin based filler reinforced composite surrounding the component and integral therewith. Such a device has improved properties due to the filler overcoat which a resin coating alone cannot provide, such as improved thermal shock resistance and improved coefficient of thermal expansion.

By practicing the method of the present invention as discussed above, dimensionally stable, lightweight intricate resin based filler reinforced composite structures having homogeneous filler distributions are readily and consistently molded. Such composites are particularly useful for forming structures, such as antenna waveguides, for space applications.

In addition, in accordance with the present invention, electrical components can be encapsulated with an electrical insulation and passivation layer to provide high reliability components.

Moreover, because of their relatively low coefficient of thermal expansion and high thermal conductivity, filled epoxy resin composite structures prepared in accordance with the method of the present invention have been determined to be especially amenable to metal plating processes when the surfaces thereof are prepared for electroless plating by plasma treatment. The relatively high adhesion of metal deposits to the composite surface is believed to be a function of both the topography of the plasma-treated surface plus the mechanical integrity of the remaining surface. Such metal plating may be required, as previously noted, to provide a conductive path in an antenna waveguide structure.

To effect plasma treatment, the surface of the filler reinforced epoxy resin based composite is subjected to a plasma process with a reaction gas containing a mixture of air, nitrogen, or argon with oxygen, water vapor, nitrous oxide, or other resin oxidizing source, to remove the polymer "skin" and expose the filler, which provides a surface that is readily platable. Normal plasma etching conditions known in the art are used. For example for a plasma excitation energy of 200 watts/ft$^2$ (watts/929 cm$^2$) of composite, an O$_2$/inert gas source of approximatley 1000 ml/minute, a vacuum pressure of 200µ Hg, and one hour duration are used.

Metal plating of the etched epoxy resin composite surface can be conveniently accomplished by electroless plating of the plasma-treated composite surface by standard procedures such as by dipping the treated composite in the plating solution for a time sufficient to achieve a uniform buildup of metal on the treated surface. Metals that can be plated on the molded epoxy resin based composites prepared in accordance with the present invention include copper, silver, nickel, cobalt, nickel/iron, nickel/cobalt, other nickel alloys and gold.

For electroless copper plating, for example, an aqueous bath of Shipley Co. #328 copper plating solution may be used, which contains copper sulfate, sodium potassium tartrate, and sodium hydroxide. Other electroless copper plating formulations can also be employed. The plating bath is agitated or stirred prior to immersion of the plasma-treated composite. Preferred plating temperatures are in the range of about 15 to about 95°C (about 59°F to 203°F). Metal adhesion is excellent even after exposure of the plated composite to cycles of widely different temperatures, as described in Examples 1 and 2 herein.

After an electroless copper plate has been formed on the composite of the present invention to provide a conductive surface, the copper plating may be built up to any desired thickness to provide a smooth surface finish, using known electrolytic plating solutions and methods; and followed by electrolytic plating of a second metal, such as silver, on the electrolytic copper plate using known solutions and methods. Such a silver layer may advantageously be used in antenna waveguide structure.

Although variations are shown in the present application, many modifications and ramifications will occur to those skilled in the art upon a reading of the present disclosure. These, too, are intended to be included herein. In particular, other materials besides those specifically described herein may be used in the method of the present invention by adjusting certain process details, such as curing temperatures, dwell time, and post-cure conditions, in accordance with information known in the art about such materials. Further, the particular subatmospheric and superatmospheric pressures and the temperatures used in the method of the present invention may be altered to be compatible with the particular resin, filler material, or electrical component being processed.

## Claims

1. A method for forming a resin based filler reinforced composite article which comprises the steps of:
   a) providing a rigid mold having a cavity therein and an opening in one surface of said mold and communicating with said cavity;
   b) providing a chamber for containing said mold and for applying heat and varying pressures to said cavity of said mold;
   c) heating said chamber to a predetermined temperature and maintaining said temperature in said chamber;
   d) loading a quantity of a particulate filler material in said cavity of said mold;
   e) loading said mold containing said filler into said heated chamber;
   f) filling the mold cavity with a low viscosity heat curable thermosetting resin which cures at said predetermined temperature;
   g) evacuating the mold cavity to a subatmospheric pressure within the range of about 1 to 200 millimeters of mercury (133 to 26600 pascals) for about 1 to 5 minutes, to impose a vacuum on the mold to therby impregnate the filler material with the resin and degas the mold contents;
   h) releasing the vacuum to atmospheric pressure to collapse any gas bubbles remaining in the mold contents;
   i) applying a superatmospheric pressure within the range of about 100 to 1000 pounds per square inch (about $6.90 \times 10^5$ to $6.90 \times 10^6$ pascals) for about 1 to 2 hours, to the mold to cause the heat curable resin to compact and encapsulate particles of the filler loaded in the mold, the temperature and the superatmospheric pressure being maintained for a time sufficient to partially cure the resin and form a unitary structure;
   j) ejecting the structure from the mold cavity; and
   k) subjecting the ejected structure to a further heating cycle to completely cure the resin.
2. A method for encapsulating an electrical component which comprises the steps of
   a) providing a rigid mold having a cavity therein and an opening in one surface of said mold and communicating with said cavity;
   b) providing a chamber for containing said mold and for applying heat and varying pressures to said cavity of said mold;
   c) heating said chamber to a predetermined temperature and maintaining said temperature in said chamber;
   d) loading the component in said cavity of said mold;
   e) loading said mold containing said component into said heated chamber;
   f) filling the mold cavity with a low viscosity heat curable thermosetting resin which cures at said predetermined temperature;
   g) evacuating the mold cavity to a subatmospheric pressure within the range of about 1 to 4 millimeters of mercury (133 to 534 pascals) for about 1 to 5 minutes, to impose a vacuum on the mold to thereby impregnate the component with the resin and degas the mold contents;
   h) releasing the vacuum to atmospheric pressure to collapse any gas bubbles remaining in the mold contents;
   i) applying a superatmospheric pressure within the range of about 50 to 100 pounds per square inch (about $3.45 \times 10^5$ to $6.90 \times 10^5$ pascals) for about 30 minutes to 3 hours to the mold to cause the heat curable resin to encapsulate the component loaded in the mold, the temperature and the superatmospheric pressure being maintained for a time sufficient to partially cure the resin and form a unitary structure;
   j) ejecting the structure from the mold cavity; and
   k) subjecting the ejected structure to a further heating cycle to completely cure the resin.
3. The method of Claim 1 or 2 wherein the heat curable resin is selected from the group consisting of an epoxy resin, a polyimide resin and a bismaleimide resin.

4. The method of Claim 3 wherein the heat curable resin is an epoxy resin comprising a mixture of a polyglycidyl aromatic amine and a polycarboxylic acid anhydride curing agent.

5. The method of Claim 4 wherein the polyglycidyl aromatic amine is diglycidyl orthotoluidine and the polycarboxylic acid anhydride curing agent is nadic methyl anhydride.

6. The method of Claim 4 wherein the polyglycidyl aromatic amine is diglycidyl aniline and the polycarboxylic anhydride curing agent is methyl tetrahydrophthalic anhydride.

7. The method of any of Claims 1 to 6 wherein the structure ejected from the mold is heated at about 250 (121°C) to about 350°F (177°C) for about 1.25 to about 4 hours.

8. The method of Claim 1 and/or any of Claims 3 to 7 wherein the filler material comprises fibers and hollow microspheres, the fibers being formed of a material selected from the group consisting of graphite, glass, carbon, and polyamide, and the microspheres being formed of a material selected from the group consisting of glass, silica, and carbon.

9. The method of any of Claims 1 to 8 wherein the mold is heated to a curing temperature of about 150°F (66°C) to about 250°F (121°C).

10. The method of Claim 1 and/or any of Claims 3—9 wherein the heat curable resin is an epoxy resin and the completely cured epoxy resin unitary structure is subsequently electrolessly plated with copper.

11. The method of Claim 1 and/or any of Claims 3 to 10 wherein the heat curable resin is an epoxy resin and the time sufficient to partially cure the resin is about 1 to 2 hours.

12. The method of any of Claims 2 to 7 and/or 9 wherein the heat curable resin is an epoxy resin and the time sufficient to partially cure the resin is about 0.5 to about 3 hours.

13. The method of Claim 1 wherein:
a) said heating of said mold is performed prior to said loading of said filler material and said resin; and
b) said mold cavity is filled simultaneously with said filler material and said resin.

14. The method of any of Claims to 7, 9 and 12 wherein prior to loading the component in the mold cavity, a predetermined quantity of filler material is loaded in the mold cavity whereby the unitary structure comprises the electrical component encapsulated and impregnated with the resin and coated with a layer of a resin based filler reinforced composite.

## Patentansprüche

1. Ein Verfahren zur Bildung eines mit einem Füllstoff auf Kunstharzbasis verstärkten Gegenstandes aus Verbundstoff, das die folgenden Stufen umfaßt:
a) Zurverfügungstellung einer starren Form mit einem Hohlraum darin und einer Öffnung in einer Oberfläche der Form, die mit dem Hohlraum in Verbindung steht;
b) Zurverfügungstellung einer Kammer zur Aufnahme der Form und zum Aufbringen von Wärme und verschiedenen Drucken auf den Hohlraum der Form;
c) Erwärmen der Kammer auf eine vorbestimmte Temperatur und Aufrechterhaltung der Temperatur in der Kammer;
d) Einbringen einer Menge eines teilchenförmigen Füllstoffmaterials in den Hohlraum der Form;
e) Einbringen der den Füllstoff enthaltenden Form in die erwärmte Kammer;
f) Füllen des Formhohlraums mit einem durch Wärme aushärtbaren hitzehärtbaren Kunstharz geringer Viskosität, das bei der vorbestimmten Temperatur aushärtet;
g) Evakuieren des Formhohlraums auf unteratmosphärischen Druck im Bereich von 1 bis 200 mm Quecksilber (133 bis 26600 Pa) während etwa 1 bis 5 Minuten, um ein Vakuum auf die Form aufzubringen und dadurch das Füllstoffmaterial mit dem Kunstharz zu imprägnieren und den Inhalt der Form zu entgasen;
h) Freisetzen des Vakuums auf atmosphärischen Druck um irgendwelche Gasblasen, die in den Inhaltstoffen der Form zurückbleiben, zusammenfallen zu lassen;
i) Aufbringen eines überatmosphärischen Drucks in Bereich von etwa 100 bis 1000 pounds per square inch (etwa $6.90 \times 10^5$ bis $6.90 \times 10^6$ Pa) während etwa 1 bis 2 Stunden, auf die Form, um zu bewirken, daß das hitzehärtbare Kunsthartz verdichtet wird und Teilchen des Füllstoffs, der in die Form eingegbracht wurde, eingehüllt werden, wobei die Temperatur und der überatmosphärische Druck lange genug aufrechterhalten werden, um das Kunstharz teilweise auszuhärten und eine einheitliche Struktur zu bilden;
j) Ausstoßen der Struktur aus dem Formhohlraum; und
k) Unterwerfen der ausgestoßenen Struktur einen weiteren Erwärmungszyklus, um das Kunstharz vollständig auszuhärten.

2. Ein Verfahren zur Einkapselung einer elektrischen Komponente, das die folgenden Schritte umfaßt:
a) Zurverfügungstellung einer starren Form mit einem Hohlraum darin und einer Öffnung in einer Oberfläche der Form, die mit dem Hohlraum in Verbindung steht;
b) Zurverfügungstellung einer Kammer zur Aufnahme der Form und zum Aufbringen von Wärme und verschiedenen Drucken auf den Hohlraum der Form;
c) Erwärmen der Kammer auf eine vorbestimmte Temperatur und Aufrechterhaltung der Temperatur in der Kammer;
d) Einbringen der Komponente in den Hohlraum der Form;
e) Einbringen der den Füllstoff enthaltenden Form in die erwärmte Kammer;

# EP 0 187 759 B1

f) Füllen des Formhohlraums mit einem durch Wärme aushärtbaren hitzehärtbaren Kustharz geringer Viskosität, das bei der vorbestimmten Temperatur aushärtet;

g) Evakuieren des Formhohlraums auf unteratmosphärischen Druck im Bereich von 1 bis 200 mm Quecksilber (133 bis 26600 Pa) während etwa 1 bis 5 Minuten, um ein Vakuum auf die Form aufzubringen und dadurch die Komponente mit dem Kunstharz zu imprägnieren und den Inhalt der Form zu entgasen;

h) Freisetzen des Vakuums auf atmosphärischen Druck um irgendwelche Gasblasen, die in den Inhaltstoffen der Form zurückbleiben, zusammenfallen zu lassen;

i) Aufbringen eines überatmosphärischen Drucks im Bereich von etwa 50 bis 100 pounds per square inch (etwa $3.45 \times 10^5$ bis $6.90 \times 10^6$ Pa), während etwa 30 Minuten bis 3 Stunden, auf die Form, um zu bewirken, daß das hitzehärtbare Harz die in die Form eingebrachte Komponente einkapselt, wobei die Temperatur und der überatmosphärische Druck genügend lange Zeit aufrechterhalten werden, um das Kunstharz teilweise auszuhärten und eine einheitliche Struktur zu bilden.

j) Ausstoßen der Struktur aus dem Formhohlraum; und

k) Unterwerfen der ausgestoßenen Struktur einem weiteren Erwärmungszyklus, um das Kunstharz vollständig auszuhärten.

3. Das Verfahren nach Anspruch 1 oder 2, wobei das hitzehärtbare Kunstharz aus der Gruppe: ein Epoxiharz, ein Polyimidharz und ein Bismaleimidharz ausgewählt ist.

4. Das Verfahren nach Anspruch 3, wobei das hitzehärtbare Harz ein Epoxiharz ist, das ein Gemisch aus einem Polyglycidyl-aromatischen Amin und einem Polycarbonsäureanhydrid-Härtungsmittel umfaßt.

5. Das Verfahren nach Anspruch 4, wobei das Polyglycidyl aromatisch Amin Diglycidylorthotoluidin ist und das Polycarbonsäureanhydrid-Härtungsmittel Nadinsäuremethylanhydrid (ein Maleinsäureanhydrid-Addukt von Methylcyclopentadien) ist.

6. Das Verfahren nach Anspruch 4, wobei das Polyglycidylaromatische Amin Diglycidylanilin ist und das Polycarbonsäureanhydrid-Härtungsmittel Methyltetrahydrophtalsäure-Anhydrid ist.

7. Das Verfahren nach einem der Ansprüche 1 bis 6, wobei die aus der Form ausgeworfene Struktur während etwa 1,25 bis etwa 4 Stunden auf etwa 250°F (121°C) bis etwa 350°F (177°C) erwärmt wird.

8. Das Verfahren nach Anspruch 1 und/oder einem der Ansprüche 3 bis 7, wobei das Füllstoffmaterial Fasern und hohle Mikrokugeln umfaßt, wobei die Fasern aus einem Material aus der Gruppe: Graphit, Glas, Kohlenstoff und Polyamid gebildet ist und die Mikrokugeln aus einem Material aus der Gruppe: Glas, Siliziumdioxid und Kohlenstoff gebildet sind.

9. Das Verfahren nach einem der Ansprüche 1 bis 8, wobei die Form auf eine Aushärtungstemperatur von etwa 150°F (66°C) bis etwa 250°F (121°C) erwärmt wird.

10. Das Verfahren nach Anspruch 1 und/oder einem der Ansprüche 3 bis 9, wobei das hitzehärtbare Harz ein Epoxiharz ist und die einheitliche Struktur aus vollständig ausgehärtem Epoxiharz anschließend stromlos mit Kupfer plattiert wird.

11. Das Verfahren nach Anspruch 1 und/oder einem der Ansprüche 3 bis 10, wobei das hitzehärtbare Harz ein Epoxiharz ist und die Zeit, die zur teilweise Aushärtung des Harzes ausreicht, etwa 1 bis 2 Stunden beträgt.

12. Das Verfahren nach einem der Ansprüche 2 bis 7 und/oder 9, wobei das hitzehärtbare Harz ein Epoxiharz ist und die Zeit, die zur teilweise Aushärtung des Harzes genügt, etwa 0,5 bis etwa 3 Stunden beträgt.

13. Das Verfahren nach Anspruch 1, wobei

a) das Erhitzen der Form vor dem Einbringen des Füllstoffmaterials und den Kunstharzes durchgeführt wird; und

b) der Formhohlraum Gleichzeitig mit dem Füllstoffmaterial und dem Kunstharz gefüllt wird.

14. Das Verfahren nach einem der Ansprüche 2 bis 7, 9 und 12, wobei vor Einbringen der Komponente in den Formhohlraum eine vorbestimmte Menge von Füllstoff-material in den Formhohlraum eingebracht wird, wobei die einheitliche Struktur die elektrische Komponente umfaßt, die eingekapselt und imprägniert mit dem Kunstharz und mit einer Schicht eines Verbundstoffes, der mit einem Füllstoff auf Kunstharzbasis verstärkt ist, beschichtet ist.

## Revendications

1. Procédé pour former un article composite à base de résine renforcé par une charge, qui comprend les étapes consistant:

a) à prévoir un moule rigide présentant une cavité et une ouverture ménagée dans une de ses surfaces et communiquant avec ladite cavité;

b) à prévoir une chambre destinée à contenir ledit moule et permettant d'appliquer de la chaleur et des pressions variables à ladite cavité dudit moule;

c) à chauffer ladite chambre à une température prédéterminée et à maintenir cette température dans ladite chambre;

d) à introduire une quantité d'une charge en particules dans ladite cavité dudit moule;

e) à mettre en place le moule contenant ladite charge dans ladite chambre chauffée;

f) à charger la cavité du moule avec une résine thermodurcissable réticulable à chaud, de faible viscosité, qui durcit à ladite température prédéterminée;

9

g) à vider d'air la cavité du moule jusqu'à une pression inférieure à la pression atmosphérique dans la plage d'environ 1 à 200 millimètres de mercure (133 à 26 600 Pa) pendant environ 1 à 5 minutes, pour faire agir un vide sur le moule afin que la matière constituant la charge soit ainsi imprégnée de résine et pour dégazer le contenu du moule;

h) à casser le vide jusqu'à la pression atmosphérique pour crever toutes les bulles de gaz restant dans le contenu du moule;

i) à appliquer une pression supérieure à la pression atmosphérique, dans la plage d'environ 100 à 1000 lb/in$^2$ (environ $6.90 \times 10^5$ à $6.90 \times 10^6$ Pa) pendant environ 1 à 2 heures, au moule pour faire en sorte que la résine réticulable à la chaleur tasse et encapsule les particules de charge introduites dans le moule, la température et la pression supérieure à la pression atmosphérique étant maintenues pendant une durée suffisante pour faire durcir partiellement la résine et pour former une structure unitaire;

j) à éjecter la structure de la cavité du moule; et

k) à soumettre la structure éjectée à une autre cycle de chauffage pour réticuler complètement la résine.

2. Procédé d'encapsulation d'un composant électrique, qui comprend les étapes consistant

a) à prévoir un moule rigide présentant une cavité avec une ouverture ménagée dans une surface dudit moule et communiquant avec ladite cavité;

b) à prévoir une chambre destinée à contenir ledit moule et à appliquer de la chaleur et des pressions variables à ladite cavité dudit moule;

c) à chauffer ladite chambre à une température prédéterminée et à maintenir cette température dans ladite chambre;

d) à charger le composant dans ladite cavité dudit moule;

e) à charger ledit moule contenant ledit composant dans ladite chambre chauffée;

f) à charger dans la cavité du moule une résine thermodurcissable réticulable à chaud, de faible viscosité, qui se réticule à ladite température prédéterminée;

g) à vider d'air la cavité du moule jusqu'à une pression inférieure à la pression atmosphérique, dans la plage d'environ 1 à 4 millimètres de mecure (133 à 534 Pa) pendant environ 1 à 5 minutes pour faire agir un vide sur le moule de manière à imprégner ainsi le composant de la résine et à dégazer le contenu du moule;

h) à casser le vide jusqu'à la pression atmosphérique pour crever toutes bulles de gaz restant dans le contenu du moule;

i) à appliquer une pression supérieure à la pression atmosphérique dans la plage d'environ 50 à 100 lb/in$^2$ (environ $3.45 \times 10^5$ à $6.90 \times 10^5$ Pa) pendant une durée allant d'environ 30 minutes à 3 heures au moule pour provoquer l'encapsulation du composant chargé dans le moule par la résine réticulable à chaud, la température et la pression supérieure à la pression atmosphérique étant maintenues pendant une durée suffisante pour réticuler partiellement la résine et pour former une structure unitaire;

j) à éjecter la structure de la cavité du moule et;

k) à soumettre la structure éjectée à un autre cycle de chauffage pour réticuler complètement la résine.

3. Procédé suivant la revendication 1 ou 2, dans lequel la résine réticulable à la chaleur est choisie dans le groupe comprenant une résine époxy, une' résine polyimide et une résine bismaléimide.

4. Procédé suivant la revendication 3, dans lequel la résine réticulable à la chaleur est une résine époxy, comprenant un mélange d'une amine aromatique polyglycidylique et d'un agent de réticulation qui est un anhydride d'acide polycarboxylique.

5. Procédé suivant la revendication 4, dans lequel l'amine aromatique polyglycidylique est la diglycidylorthotoluidine et l'anhydride d'acide polycarboxylique utilisé comme agent de réticulation est l'anhydride méthylnadique.

6. Procédé suivant la revendication 4, dans lequel l'amine aromatique polyglycidylique est la diglycidylaniline et l'anhydride polycarboxylique utilisé comme agent de réticulation est l'anhydride méthyltétrahydrophtalique.

7. Procédé suivant l'une quelconque des revendications 1 à 6, dans lequel la structure éjectée du moule est chauffée à une température d'environ 250°F (121°C) à environ 350°F (177°C) pendant environ 1,25 à environ 4 heures.

8. Procédé suivant la revendication 1 et/ou l'une quelconque des revendications 3 à 7, dans lequel la charge comprend des fibres et des sphères microscopiques creuses, les fibres étant formées d'une matière choisie dans le groupe comprenant le graphite, le fer, le carbone et un polyamide, et les sphères microscopiques étant formées d'une matière choisie dans le groupe comprenant le verre, la silice et le carbone.

9. Procédé suivant l'une quelconque des revendications 1 à 8, dans lequel le moule est chauffé à une température de réticulation d'environ 150° (66°C) à environ 250°F (121°C).

10. Procédé suivant la revendication 1 et/ou l'une quelconque des revendications 3 à 9, dans lequel la résine réticulable à chaud est une résine époxy et la structure unitaire de résine époxy complètement réticulée est ensuite revêtue d'un dépôt chimique de cuivre.

11. Procédé suivant la revendication 1 et/ou l'une quelconque des revendications 3 à 10, dans lequel la résine réticulable à la chaleur est une résine époxy, et le temps suffisant pour réticuler partiellement la résine est d'environ 1 à 2 heures.

12. Procédé suivant l'une quelconque des revendications 2 à 7 et/ou 9, dans lequel la résine réticulable à la chaleur est une résine époxy, et le temps suffisant pour réticuler partiellement la résine est d'environ 0,5 à environ 3 heures.

13. Procédé suivant la revendication 1, dans lequel:

a) le chauffage du moule est effectué avant que la charge et la résine ne soient introduites; et

b) la cavité du moule est remplie simultanément avec la charge et ladite résine.

14. Procédé suivant l'une quelconque des revendications 2 à 7, 9 et 12, dans lequel, avant que le composant ne soit introduit dans la cavité du moule, une quantité prédéterminée de charge est introduite dans la cavité, en sorte que la structure unitaire comprend le composant électrique encapsulé et imprégné de résine et revêtu d'une couche d'un composite à base de résine renforcé par une charge.